# EUROPÄISCHE PATENTANMELDUNG

(11) **EP 0 998 106 A2**
(43) Veröffentlichungstag der Anmeldung: **03.05.2000**
(21) Anmeldenummer: 99440281.6
(22) Anmeldetag: 22.10.1999
(51) Int. Cl.: H04M 3/42

(54) **Knoten und Verfahren zur Erbingung von Telekommunikationsdiensten für Nebenstellentelekommunikationsnetze**

(30) Priorität: 29.10.1998 DE 19849832
(71) Anmelder: ALCATEL, 75008 Paris (FR)
(72) Erfinder: Lautenschlager, Wolfgang, 71287 Weissach-Flacht (DE); Wintterle, Gerd-Joachim, 70191 Stuttgart (DE); Siegmund, Gerd, 70435 Stuttgart (DE); Weik, Hartmut, 70195 Stuttgart (DE); Rupp, Stephan, 74354 Besigheim (DE)
(74) Vertreter: Zinsinger, Norbert

(57) **Zusammenfassung**

Die vorliegende Erfindung betrifft einen Knoten (INTS) und ein Verfahren zur Erbringung von Telekommunikationsdiensten für Nebenstellentelekommunikationsnetze. Der Knoten (INTS) baut Verbindungen zwischen mindestens einem ersten Nebenstellentelekommunikationsnetz (PABX1) und einem zweiten Nebenstellentelekommunikationsnetz (PABX2) mit Hilfe mindestens eines ersten, zwischen Nebenstellentelekommunikationsnetzen gebräuchlichen Protokolles auf sowie Verbindungen zu einem externen Telekommunikationsnetz (PSTN). Dazu wird vorgeschlagen daß der Knoten Dienstfunktionen für das erste oder das zweite Nebenstellentelekommunikationsnetz erbringen kann und daß der Knoten eine Verbindung von dem ersten oder dem zweiten Nebenstellentelekommunikationsnetz zu dem externen Telekommunikationsnetz aufbauen kann.

## Beschreibung

Die vorliegende Erfindung betrifft einen Knoten zur Erbringung von Telekommunikationsdiensten für Nebenstellentelekommunikationsnetze gemäß dem Oberbegriff des Anspruchs 1, sowie ein Verfahren gemäß dem Oberbegriff des Anspruchs 10 hierfür.

Durch Nebenstellenvermittlungsanlagen, auch als Nebenstellenanlagen, als PBX (Private Branch Exchange) oder als PABX (Private Automatic Branch Exchange) bezeichnet, werden lokale Nebenstellentelekommunikationsnetze, kurz Nebenstellennetze, gebildet, z.B. zum Anschluß diverser Endgeräte innerhalb eines Unternehmens oder auch innerhalb eines Privathaushaltes. Über Teilnehmeranschlußleitungen werden solche Nebenstellennetze mit öffentlichen Vermittlungsstellen verbunden und somit sind verschiedene Nebenstellennetze über das öffentliche Telekommunikationsnetz miteinander verbunden. Wenn dann von einem solchen Nebenstellennetz über das öffentliche Telekommunikationsnetz eine Rufverbindung in ein anderes Nebenstellennetz aufgebaut werden soll, so muß üblicherweise eine Rufnummer angegeben werden, die aus der Rufnummer der gerufenen Nebenstellenvermittlungsanlage und einer Rufnummer eines an diese angeschlossenen Endgerätes zusammengesetzt ist.

Vor allem Unternehmen, deren Unternehmensteile auf verschiedene Standorte mit jeweils einem lokalen Nebenstellennetz verteilt sind, fordern, daß ihre lokalen Nebenstellennetze zu einem gemeinsamen, unternehmensweiten Nebenstellennetz verknüpft werden, dessen Endgeräte möglichst über einen unternehmensweiten Rufnummernplan erreicht werden können. Ein solches unternehmensweites Nebenstellennetz kann durch Zusammenschalten verschiedener Nebenstellenanlagen geschaffen werden, die untereinander über Querverbindungen mit Hilfe sogenannter Querleitungprotokolle, z.B. des IPNS-Protokolles (ISDN PABX Networking Specification) oder des QSIG-Protokolles kommunizieren. Solche Zusammenschaltungen werden z.B. von Gerd Siegmund in seinem Buch "Technik der Netze", 3. Auflage, erschienen 1996 im R. v. Decker's Verlag, Hüthig GmbH, Heidelberg (ISBN 3-7685-2495-7) auf den Seiten 552-558 unter der Überschrift "Privatnetze" beschrieben. In den dort aufgeführten Beispielen kommunizieren die Nebenstellenanlagen zwar untereinander über Querverbindungen, sind jedoch jeweils über eigene Anschlußleitungen an ein externes Telekommunikationsnetz, z.B. ein öffentliches Telekommunikationsnetz angebunden, so daß die Nebenstellenanlagen Verbindungen zu dem externen Telekommunikationsnetz jeweils selbst aufbauen. Außerdem können zwar pro Nebenstellenanlage jeweils anlagenspezifische, durch den jeweiligen Hersteller definierte Telekommunikationsdienste erbracht werden. Aber lediglich mit Hilfe des externen Netzes ist es möglich, für alle Nebenstellenanlagen gemeinsam Telekommunikationsdienste zu erbringen, insbesondere für ein sogenanntes Intelligentes Netz (IN) definierte Telekommunikationsdienste. Beispielhaft seien hier z.B. die Funktion Virtual Private Network (VPN) und die Funktion Rufnummernportabilität genannt. Mit VPN ist es möglich, die Nebenstellenanlagen über einen aus Sicht des externen Netzes gemeinsamen, z.B. den erwähnten unternehmensweiten Rufnummernplan miteinander zu vernetzen. Mit Hilfe der Funktion Rufnummernportabilität kann z.B. eine Rufnummer aus dem Rufnummernbereich einer Nebenstellenanlage in den Rufnummernbereich einer alternativen Nebenstellenanlage verlegt werden. Allerdings können dann nur mit Hilfe des externen Netzes Dienstfunktionen angeboten werden und auch nur solche Dienstfunktionen, die für ein Intelligentes Netz standardisiert sind.

Aufgabe der Erfindung ist es, Nebenstellenanlagen mit einem externen Telekommunikationsnetz zu verbinden und für die Nebenstellenanlagen Telekommunikationsdienste zu erbringen.

Diese Aufgabe wird durch einen Knoten gemäß der technischen Lehre des Anspruchs 1, sowie ein Verfahren gemäß der technischen Lehre des Anspruchs 10 gelöst. Weitere vorteilhafte Ausgestaltungen der Erfindung sind den abhängigen Ansprüchen und der Beschreibung zu entnehmen.

Der Erfindung liegt hierbei der an sich bekannte Gedanke zugrunde, lokale Nebenstellentelekommunikationsnetze mit Hilfe eines Knotens zu einem übergeordneten Nebenstellentelekommunikationsnetz miteinander zu verbinden. Dieser Knoten ermöglicht dann erfindungsgemäß bereits nebenstellenseitig die Kommunikation der lokalen Nebenstellentelekommunikationsnetze untereinander, insbesondere auf der Basis von Querleitungsprotokollen und schafft zusätzlich in einer Funktion als als ein für das übergeordnete Nebenstellentelekommunikationsnetz zentraler Transit-Knoten einen Zugang für die lokalen Nebenstellentelekommunikationsnetze zu einem externen Telekommunikationsnetz, z.B. einem öffentlichen Telekommunikationsnetz. Der Knoten erbringt weiter für das übergeordnete Nebenstellentelekommunikationsnetz Telekommunikationsdienste. Diese Telekommunikationsdienste kann der Knoten entweder durch eigene, knoteninterne Mittel leisten oder durch Anbindung externer Hilfsmittel, z.B. durch Anbindung einer Diensterbringungseinrichtung eines Intelligenten Netzwerkes.

Im folgenden werden die Erfindung und ihre Vorteile anhand eines Ausführungsbeispiels unter Zuhilfenahme der Zeichnungen dargestellt.
- Figur 1: zeigt eine Anordnung mit einem erfindungsgemäßen Knoten INTS, ein Telekommunikationsnetz PSTN, sowie Nebenstellenanlagen PABX1 und PABX2.
- Figur 2: zeigt eine detailliertere Darstellung des erfindungsgemäßen Knoten INTS aus Figur 1.

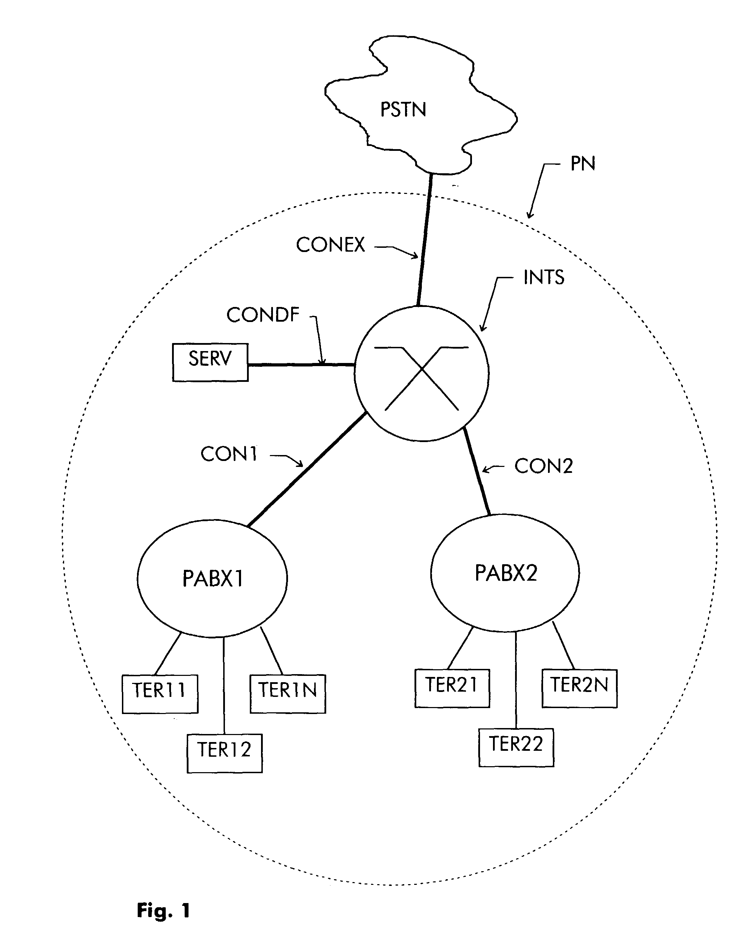

Eine Ausführungsform der Erfindung wird im folgenden anhand Figur 1 dargestellt. Figur 1 zeigt einen Knoten INTS, an den über eine Verbindung CON1 eine Nebenstellenanlage PABX1 und über eine Verbindung CON2 eine Nebenstellenanlage PABX2 angeschlossen sind. Neben den Nebenstellenanlagen PABX1 und PABX 2 können auch weitere, in Figur 1 nicht dargestellte Nebenstellenanlagen an den Knoten INTS angeschlossen sein. An die Nebenstellenanlagen PABX1 und PABX 2 sind jeweils beispielhaft einige Endgeräte angeschlossen und zwar an die Nebenstellenanlage PABX1 die Endgeräte TER11, TER12 und TER1N sowie an die Nebenstellenanlage PABX2 die Endgeräte TER21, TER22 und TER2N. Diese Endgeräte können z.B. Telefonapparate, Faxgeräte, Modems oder Personal Computer sein. Der Knoten INTS ist über eine Verbindung CONEX mit einem Telekommunikationsnetz PSTN verbunden, das z.B. ein öffentliches Telekommunikationsnetz - auch auf der Basis des ISDN-Standards - sein kann. Weiterhin ist der Knoten INTS über eine Verbindung CONDF mit einer Diensterbringungseinrichtung SERV verbunden. Wie später noch deutlich wird, kann der Knoten INTS sowohl Telekommunikationsdienste mit Hilfe eigener Mittel erbringen, als auch, wie in Figur 1 dargestellt, mit externer Hilfe, nämlich der Diensterbringungseinrichtung SERV. Die Diensterbringungseinrichtung SERV kann z.B. ein globaler Dienststeuerknoten, ein sogenannter SCP (Service Control Point) für ein Intelligentes Netz sein, der üblicherweise über das sogenannte Zentrale Zeichengabenetz Nr. 7 mit mehreren Dienstvermittlungsstellen, sogenannten SSPs (Service Switching Points) verbunden ist und für die mit ihm verbundenen Dienstvermittlungsstellen zentral die Erbringung von einem oder von mehreren Telekommunikationsdiensten steuert. Die Diensterbringungseinrichtung SERV kann auch über solche Verbindungen mit den SSP-Dienstvermittlungsstellen oder mit dem Knoten INTS verbunden sein, auf denen nicht mit Hilfe des sogenannten Zentralen Zeichengabesatzes Nr. 7, sondern z.B. mit einem TCP/IP-Protokoll (Transmission Control Protocol / Internet Protocol) Daten ausgetauscht werden. Die Diensterbringungseinrichtung SERV kann auch innerhalb des Telekommunikationsnetzes PSTN angeordnet sein oder innerhalb eines weiteren, in Figur 1 nicht dargestellten Telekommunikationsnetzes. Die Verbindungen CON1, CON2, CONDF und CONEX können sowohl Verbindungen jeweils auf einem einzelnen Verbindungsweg darstellen, als auch für eine Verbindung auf einem Verbindungsweg stehen, auf denen mehrere Kommunikationskanäle für Verbindungen zur Verfügung stehen.

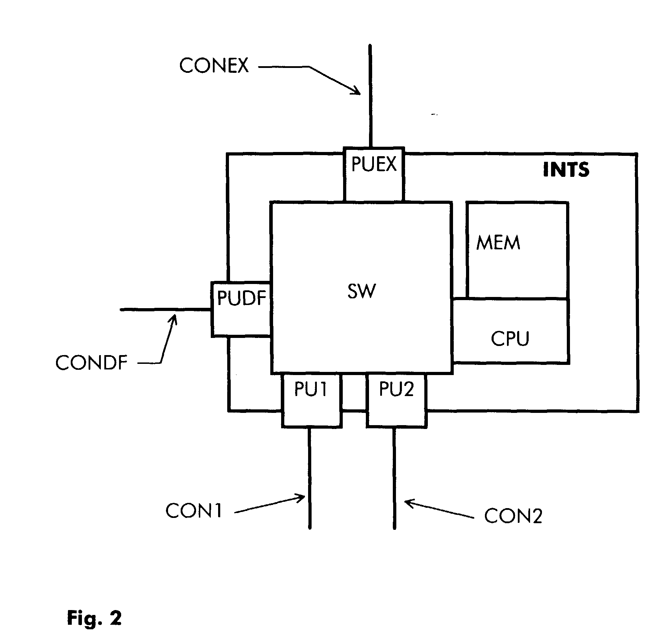

Um auf die Funktionsweise des Knotens INTS näher eingehen zu können, werden im folgenden anhand von Figur 2 wesentliche Komponenten des Knotens INTS, nämlich eine Schalteinrichtung SW, ein Steuermittel CPU und ein Speicher MEM erläutert. In den Knoten INTS mündet die aus Figur 1 bekannte Verbindung CON1, die über eine Anschlußvorrichtung PU1 innerhalb des Knotens INTS bis hin zu der Schalteinrichtung SW geführt ist. In Analogie führt die Verbindung CON2 über eine Anschlußvorrichtung PU2 zu der Schalteinrichtung SW, die Verbindung CONDF über eine Anschlußvorrichtung PUDF und die Verbindung CONEX über eine Anschlußvorrichtung PUEX zu der Schalteinrichtung SW. Die Anschlußvorrichtungen PU1, PU2, PUDF und PUEX können z.B. Anschlußbaugruppen oder Schnittstellenmodule sein. Die Schalteinrichtung SW kann die in sie mündenen Verbindungen CON1, CON2, CONDF und CONEX, wie später noch erläutert wird, untereinander verbinden. Die Schalteinrichtung SW kann z.B. ein Koppelfeld sein, das von dem Steuermittel CPU gesteuert wird. Das Steuermittel CPU kann z.B. ein Prozessor sein, der Programme ausführt, die in dem Speicher MEM gespeichert sind. Das Steuermittel CPU, der Speicher MEM und die Schalteinrichtung SW sind über in Figur 2 nicht dargestellte Verbindungen jeweils miteinander verbunden. Im folgenden werden die Funktionen des Knoten INTS im wesentlichen unter Bezug auf die Figur 1 und bei detaillierterer Darstellung zusätzlich unter Bezug auf Figur 2 genauer erläutert.

Der Knoten INTS verbindet die Nebenstellenanlage PABX1 und die Nebenstellenanlage PABX2. Die Nebenstellenanlage PABX1 und PABX2 bilden mit Hilfe des Knoten INTS ein sogenanntes privates Telekommunikationsnetz, das in Figur 1 mit dem Bezeichner PN versehen ist. Wenn z.B. von dem Endgerät TER11 eine Verbindung zu dem Endgerät TER22 hergestellt werden soll, so sendet die Nebenstellenanlage PABX1 zunächst einen Verbindungswunsch, der die Rufnummer des Endgerätes TER22 enthält, auf der Verbindung CON1 an den Knoten INTS. Der Knoten INTS verbindet dann mit Hilfe der Schalteinrichtung SW die Verbindung CON1 mit der Verbindung CON2 und leitet den Verbindungswunsch an die Nebenstellenanlage PABX2 zum weiteren Aufbau der Verbindung von dem Endgerät TER11 zu dem Endgerät TER22 weiter. Parallel zu der Verbindung von dem Endgerät TER11 zu dem Endgerät TER22 kann der Knoten INTS auch weitere Verbindungen herstellen, z.B. eine Verbindung von dem Endgerät TER12 zu dem Endgerät TER2N.

Der Verbindungsaufbau sowie der Verbindungsabbau und der auf der Verbindung geführte Informationsaustausch kann über ein zwischen Nebenstellenanlagen gebräuchliches Protokoll erfolgen. Die Nebenstellenanlage PABX1 und die Nebenstellenanlage PABX2 können über den Knoten INTS z.B. mit dem ABC-Protokoll der Firma Alcatel oder mit dem CorNet-Protokoll der Firma Siemens kommunizieren. Es ist natürlich auch möglich, daß der Knoten INTS auch auf der Basis anderer, hier nicht aufgeführter Protokolle Verbindungen zwischen der Nebenstellenanlage PABX1 und der Nebenstellenanlage PABX2 aufbauen kann, z.B. mit Hilfe des ISDN-Protokolles DSS1 (ISDN = Integrated Services Digital Network, DSS1 = Digital Subscriber Signalling System No. 1) oder der bereits erwähnten standardisierten Protokolle IPNS-Protokoll (ISDN PABX Networking Specification) oder QSIG-Protokoll.

Außer Verbindungen zwischen den Nebenstellenanlagen PABX1 und PABX2 kann der Knoten INTS auch Verbindungen zwischen zumindest einer der beiden Nebenstellenanlagen und dem Telekommunikationsnetz PSTN aufbauen. Wenn z.B. an dem Endgerät TER11 eine Verbindung zu einem Teilnehmer gewünscht wird, der nicht an die Nebenstellenanlage PABX2 sondern an das Telekommunikationsnetz PSTN angeschlossen ist, empfängt der Knoten INTS diesen Verbindungswunsch auf der Verbindung CON1. Anhand der in dem Verbindungswunsch enthaltenen Teilnehmernummer, erkennt der Knoten INTS, daß eine Verbindung zu dem Telekommunikationsnetz PSTN gewünscht wird. Der Knoten INTS sendet dann den Verbindungswunsch weiter auf der Verbindung CONEX an das Telekommunikationsnetz PSTN zum weiteren Verbindungsaufbau und verbindet die Verbindung CON1 über die Schalteinrichtung SW mit der Verbindung CONEX. In umgekehrter Richtung kann der Knoten INTS auch von dem Telekommunikationsnetz PSTN gesendete Verbindungswünsche zu einem Teilnehmer innerhalb des privaten Telekommunikationsnetzes PN erfüllen. Sendet das Telekommunikationsnetz PSTN z.B. eine Verbindungswunsch zu dem Endgerät TER22 an den Knoten INTS, ermittelt der Knoten INTS zunächst anhand von in dem Speicher MEM abgelegten Tabellen, über welche der an ihn angeschlossenen Nebenstellenanlagen PABX1 oder PABX2 das gerufene Endgerät TER22 erreichbar ist. Nachdem der Knoten INTS festgestellt hat, daß das Endgerät TER22 an die Nebenstellenanlage PABX2 angeschlossen ist, schaltet der Knoten INTS eine Verbindung zwischen der Verbindung CONEX und der Verbindung CON2 über die Schalteinrichtung SW und sendet den von dem Telekommunikationsnetz PSTN empfangenen Verbindungswunsch an die Nebenstellenanlage PABX2 weiter.

Sofern die Nebenstellenanlage PABX1 und die Nebenstellenanlage PABX2 sowie das Telekommunikationsnetz PSTN über solche Schnittstellen verfügen, daß sie untereinander über ein gemeinsames Protokoll kommunizieren können, z.B. über das erwähnte DSS1 -Protokoll, kann der Knoten INTS Verbindungen zwischen dem Telekommunikationsnetz PSTN und der Nebenstellenanlage PABX1 oder der Nebenstellenanlage PABX2 über die Schalteinrichtung SW ohne weitere Protokollanpassung direkt schalten. Kann jedoch eine der Nebenstellenanlagen, z.B. die Nebenstellenanlage PABX2, auf der Verbindung CON2 nur über ein herstellerspezifisches Querleitungsprotokoll, z.B. das ABC-Protokoll, mit dem Knoten INTS kommunizieren und ist für Kommunikation auf der Verbindung CONEX ein für ein öffentliches Telekommunikationsnetz übliches Protokoll, z.B. das DSS1-Protokoll, festgelegt, paßt der Knoten INTS dieses Querleitungsprotokoll und das auf der Verbindung CONEX gebräuchliche Protokoll wechselseitig aufeinander an. Dabei werden von der Anschlußvorrichtung PU2 empfangene und an die Anschlußvorrichtung PUEX zu sendende Nachrichten ebenso wie von der Anschlußvorrichtung PUEX empfangene und an die Anschlußvorrichtung PU1 zu sendende Nachrichten nicht direkt mit Hilfe der Schalteinrichtung SW von Anschlußvorrichtung zu Anschlußvorrichtung weitergeleitet, sondern über das Steuermittel CPU umgeleitet. Dort werden solche Nachrichten, die im jeweils anderen Protokoll nicht definiert sind, herausgefiltert und gegebenenfalls durch eine Nachricht ersetzt, die im jeweils anderen Protokoll eine ähnliche Funktion erfüllt, wie eine herausgefilterte Nachricht. Dabei kann eine einzelne Nachricht in einem Protokoll im jeweils anderen Protokoll durchaus mehrere Nachrichten erforderlich machen und umgekehrt können mehrere Nachrichten des einen Protokolles zu einer einzigen Nachricht im jeweils anderen Protokoll zusammengefaßt werden. Teilweise wird es auch genügen, daß das Steuermittel CPU empfangene Nachrichten vor der Weiterleitung an die Erfordernisse des jeweiligen Ziel-Protokolles geringfügig anpaßt. Bei Nutzung dieser wechselseitigen Protokollanpassung des Knotens INTS von einem in dem Telekommunikationsnetz PSTN gebräuchlichen "externen" Protokoll und einem in Nebenstellennetzen gebräuchlichen "internen" Protokoll benötigen die an den Knoten INTS angeschlossenen Nebenstellenanlagen keine eigene Schnittstelle für das externe Protokoll. Außerdem können diese Nebenstellenanlagen bei allen Verbindungswünschen aus dem eigenen Anschlußbereich heraus, mit dem Knoten INTS stets mit einem einheitlichen Protokoll kommunizieren. Die Nebenstellenanlage PABX1 kann dann z.B. bei einem Verbindungswunsch, der nicht zu eine Verbindung zwischen den Endgeräten TER11, TER12 oder TER1 N führt, stets mit dem für die Verbindung CON1 definierten Protokoll mit dem Knoten INTS Daten austauschen und muß in Bezug auf das verwendete Protokoll nicht zwischen Verbindungen zu dem Telekommunikationsnetz PSTN oder zu der Nebenstellenanlage PABX2 unterscheiden.

Wenn die Nebenstellenanlage PABX1 auf der Verbindung CON1 und die Nebenstellenanlage PABX2 auf der Verbindung CON2 jeweils mit unterschiedlichen Protokollen mit dem Knoten INTS kommunizieren, kann der Knoten INTS diese Protokolle wechselseitig aufeinander anpassen. Dabei normiert der Knoten INTS z.B. ein herstellerspezifisches Protokoll auf ein standardisiertes Protokoll. Wenn die Nebenstellenanlage PABX1 z.B. das erwähnte ABC-Protokoll verwendet, das zumindest teilweise in dem IPNS-Protokoll enthalten ist, und die Nebenstellenanlage PABX2 nicht das ABC-Protokoll, wohl aber das IPNS-Protokoll beherrscht, kann der Knoten INTS aus den von der Nebenstellenanlage PABX1 an die Nebenstellenanlage PABX2 gesendeten Nachrichten solche Nachrichten herausfiltern, die nicht in dem IPNS-Protokoll definiert sind, oder Nachrichten soweit modifizieren, daß sie den Anforderungen des IPNS-Protokolles genügen. Für dieses Filtern oder Modifizieren in dem Knoten INTS werden von der Nebenstellenanlage PABX1 empfangenen Nachrichten zunächst von der Anschlußvorrichtung PU1 über die Schalteinrichtung SW zu dem Steuermittel CPU geleitet, dort nach aus dem Speicher MEM geladenen Programm-Anweisungen bearbeitet und anschließend über die Schalteinrichtung SW zu der Anschlußvorrichtung PU2 gesendet. Durch diese Protokollanpassungsfunktion des Knotens INTS können bereits vorhandene Nebenstellenanlagen miteinander kommunizieren und zu einem privaten Nebenstellentelekommunikationsnetz verbunden werden, auch wenn diese Nebenstellenanlagen mit unterschiedlichen Protokollschnittstellen ausgestattet sind.

Zusätzlich zu dem dargestellten Verbindungsaufbau und späteren Verbindungsabbau zwischen an Nebenstellenanlagen angeschlossenen Endgeräten untereinander und zu Endgeräten, die an das externe Telekommunikationsnetz PSTN angeschlossen sind, kann der Knoten INTS auch weitere Telekommunikationsdienste erbringen. So kann der Knoten INTS Rufnummernportabilität für das private Telekommunikationsnetz PN ermöglichen, ohne daß dessen Nebenstellenanlagen für einen solchen Dienst ausgelegt sind. Wenn z.B. ein Teilnehmer nicht mehr über das Endgerät TER11 erreichbar sein will, sondern über das Endgerät TER22, aber weiterhin eine ursprünglich dem Endgerät TER11 zugeordnete Rufnummer benutzen will, kann diese Rufnummer mit Hilfe des Knotens INTS auf das Endgerät TER22 portiert werden. Dazu wird in dem Speicher MEM eine Rufnummernportabilitätstabelle abgelegt, in welcher jeweils eine Rufnummer des privaten Telekommunikationsnetzes PN einem oder mehreren Endgeräten zugeordnet wird. Diese Rufnummernportabilitätstabelle wird durch das Steuermittel CPU entweder bei jedem in dem Knoten INTS ankommenden Verbindungswunsch ausgewertet, oder nur bei Verbindungswünschen, die z.B. durch eine der gewählten Rufnummer vorangestellten Ziffernfolge als Verbindungswünsche zu portierten Rufnummern gekennzeichnet sind. Im erwähnten Beispiel wird also der Rufnummer des Teilnehmers nicht das Endgerät TER1 1 sondern das Endgerät TER22 zugeordnet. Wenn nun ein Verbindungswunsch zu dem Teilnehmer z.B. von dem Endgerät TER21 aus an die Nebenstellenanlage PABX2 gesendet wird, sendet diese den Verbindungswunsch auf der Verbindung CON2 an den Knoten INTS. Dieser ermittelt dann anhand seiner Rufnummernportabilitätstabelle, daß das Endgerät TER22 der Rufnummer der Rufnummer zugeordnet ist. Der Knoten INTS kann dann durch eine Nachricht die Nebenstellenanlage PABX2 dazu anweisen, den Verbindungswunsch durch eine interne Verbindung zwischen dem Endgerät TER21 und dem Endgerät TER22 zu erfüllen. Wenn auf der Verbindung CON2 mehrere Kommunikationskanäle von und zu dem Knoten INTS führen, kann der Knoten INTS auch selbst eine Verbindung zwischen dem Endgerät TER21 und dem Endgerät TER22 aufbauen, z.B. indem der Knoten INTS mit Hilfe der Schalteinrichtung SW zwei der Kommunikationskanäle der Verbindung CON2 miteinander verbindet, von denen einer zu dem Endgerät TER21 und einer zu dem Endgerät TER22 führt. Auch wenn der Verbindungswunsch zu der Rufnummer von einem der an die Nebenstellenanlage PABX1 angeschlossenen Endgeräte ausgeht, z.B. von dem Endgerät TER1N, oder von einem an das Telekommunikationsnetz PSTN angeschlossenen, in Figur 1 nicht dargestellten Endgerät, baut der Knoten INTS mit Hilfe seiner Rufnummernportabilitätstabelle die gewünschte Verbindung statt an das Endgerät TER1zu dem Endgerät TER22 auf.

Weiter ist möglich, daß eine Rufnummer nicht nur innerhalb des privaten Telekommunikationsnetzes PN portiert wird, sondern auch aus diesem heraus zu einem "externen" Teilnehmeranschluß, der nur über das Telekommunikationsnetz PSTN erreichbar ist. Auch in diesem Fall ermittelt der Knoten INTS anhand seiner Rufnummernportabilitätstabelle, wenn ein Ruf von einem Endgerät des privaten Telekommunikationsnetzes PN zu der portierten Rufnummer führt und stellt dann eine Verbindung zu dem "externen" Teilnehmeranschluß über das Telekommunikationsnetz PSTN her. Auch wenn der Knoten INTS einen Verbindungswunsch von dem Telekommunikationsnetz PSTN aus zu der nunmehr in das Telekommunikationsnetz PSTN portierten Rufnummer empfängt, kann der Knoten INTS diesen Verbindungswunsch wieder in das Telekommunikationsnetz PSTN zurücklenken, nachdem der Knoten INTS anhand seiner Rufnummernportabilitätstabelle ermittelt hat, daß die Rufnummer zu einem Teilnehmeranschluß des Telekommunikationsnetzes PSTN portiert ist.

Wenn der Knoten INTS von dem Telekommunikationsnetz PSTN einen Verbindungswunsch mit einer Rufnummer erhält, die weder einem Teilnehmeranschluß der Nebenstellenanlage PABX1 noch der Nebenstellenanlage PABX2 zugeordnet ist, also eine sogenannte unbeschaltete Rufnummer ist, weist der Knoten INTS einen solchen Verbindungswunsch entweder zurück oder baut ersatzweise die weitere Verbindung zu einem für solche Fälle vorgesehenen Teilnehmeranschluß innerhalb des privaten Telekommunikationsnetzes PN auf, z.B. zu einer Telefonzentrale.

Mit Hilfe des Steuermittels CPU und des Speichers MEM kann der Knoten INTS auch weitere Telekommunikationsdienste erbringen, z.B. Anrufe aus dem Telekommunikationsnetz PSTN abhängig von der Tageszeit an bestimmte Ziele innerhalb des privaten Telekommunikationsnetzes PN leiten oder gebührenfreie Anrufe aus dem Telekommunikationsnetz PSTN in das private Telekommunikationsnetz PN hinein ermöglichen. Es ist jedoch auch möglich, daß der Knoten INTS solche Telekommunikationsdienste nicht selbständig, sondern im Zusammenwirken mit einer Diensterbringungseinrichtung leistet, z.B. mit der in Figur 1 dargestellten Diensterbringungseinrichtung SERV. Bei der Diensterbringungseinrichtung SERV handelt es sich um einen Server-Rechner, z.B. einen Personal Computer oder eine Workstation, oder ein Netzwerk aus solchen Rechnern. In einem Speicher der Diensterbringungseinrichtung SERV kann z.B. die Rufnummernportabilitätstabelle abgelegt sein, mit der der Knoten INTS die beschriebene Rufnummernportabilitätsfunktionen erfüllen kann.

Es ist jedoch auch möglich, daß der Knoten INTS Funktionen eines SSPs (Service Switching Points) leistet und die Diensterbringungseinrichtung SERV ein SCP (Service Control Point) innerhalb eines Intelligenten Netzes (IN) ist, der außer dem Knoten INTS auch weitere Knoten bedient. Die Diensterbringungseinrichtung SERV erbringt dann sogenannte Dienststeuerfunktionen (SCF = Service Control Functions), der Knoten INTS sogenannte Dienstvermittlungsfunktionen (SSF = Service Switching Functions). Der Knoten INTS kommuniziert zur Erbringung von Telekommunikationsdiensten mit der Diensterbringungseinrichtung SERV auf der Verbindung CONDF auf der Basis des Zentralen Zeichengabesatzes Nr. 7 mit Hilfe des sogenannten INAP Protokolls (INAP = Intelligent Network Applications Protocol), mittels dem Dienstvermittlungsfunktionen und Dienststeuerfunktionen gemäß der IN-Architektur interagieren. Die im Rahmen dieses Protokolls ausgetauschten IN-Applikationsnachrichten (INAP Nachrichten) sowie grundlegende Dienste und Aktionen dieses Protokolls werden beispielsweise in der Empfehlung ITU-T Q.1219, "Intelligent Network User's Guide for Capability Set 1" im Kapitel 6.5, "Intelligent Network Applications Protokoll (INAP)", auf den Seiten 32 bis 40 erläutert. Die genannte Empfehlung ITU-T Q.1219 bezieht sich dabei auf das sogenannte Capability Set 1 (CS-1), das einen bestimmten Umfang von Telekommunikationsdiensten innerhalb eines Intelligenten Netzes und deren Leistungsmerkmale definiert. Eine Einführung in diese Dienste gibt die ITU-T Recommendation Q.1211 "Introduction to Intelligent Network Capability Set 1". Beispiele für Dienste des "Capability Set 1" sind eine Identifizierung böswilliger Anrufer ("Malicious Call Identification (MCI)"), Kurzwahl ("Abbreviated Dialling (ABD)") oder Bezahlung eines Rufes durch den Angerufenen ("reverse charging/Freephone (FPH)"). Weitere Dienste sind ebenfalls möglich, sowohl eigene, speziell für das private Telekommunikationsnetz PN definierte Telekommunikationsdienste als auch durch fortschreitende Standardisierung, z.B. im Rahmen des sogenannten Capability Sets2 (CS-2), vorgesehene Telekommunikationsdienste.

Wie im obigen Abschnitt deutlich geworden ist, ermöglicht der Knoten INTS dem privaten Telekommunikationsnetz PN einen Zugang zu Diensten eines Intelligenten Netzes, wobei bei der Diensterbringungseinrichtung SERV auf eine für Intelligente Netze bereits verfügbare Komponente zurückgegriffen werden kann. In diesem Zusammenhang ist besonders zu betonen, daß der Knoten INTS Dienstvermittlungsfunktionen auch für Verbindungsanforderungen erbringen kann, die von der Nebenstellenanlage PABX1 oder der Nebenstellenanlage PABX2 auf der Basis der erwähnten Querleitungsprotokolle gesendet werden, z.B. dem DSS1-Protokoll oder dem ABC-Protokoll. Empfängt der Knoten INTS von einem Endgerät des privaten Telekommunikationsnetzes PN, z.B. von dem Endgerät TER11, eine spezielle Verbindungsanforderung, die z.B. durch eine besondere Kennziffer den Wunsch nach einem Telekommunikationsdienst anzeigt, so wird die erwähnte, in den Knoten INTS integrierte Dienstvermittlungsfunktion angesprochen, die dann eine Dienstanforderungsnachricht erzeugt und an die Diensterbringungseinrichtung SERV sendet. Diese Dienstanforderungsnachricht triggert in der Diensterbringungseinrichtung SERV die ihr zugeordnete Dienstelogik, die dann die Erbringung des Telekommunikationsdienstes steuert, indem sie beispielsweise den Knoten INTS dazu anweist, die Verbindungsanforderung zu einer anderen Zielrufnummer weiterzuvermitteln als zu einer in der Verbindungsanforderung eigentlich vorgegebenen Zielrufnummer.

Der Knoten INTS kann die Dienstanforderungsnachricht an die Diensterbringungseinrichtung SERV nach in dem Speicher MEM abgelegten Regeln erzeugen und gegebenenfalls anschließend von der Diensterbringungseinrichtung SERV empfangene Anweisungen zur weiteren Bearbeitung der Verbindungsanforderung umsetzen. Ebenso ist es auch möglich, daß der Knoten INTS eine in einem Querleitungsprotokoll, beispielsweise von der Nebenstellenanlage PABX1 empfangene Verbindungsanforderung in das für die Verbindung CONEX festgelegte Protokoll übersetzt, z.B. in das INAP-Protokoll, das beispielsweise auf der Basis des erwähnten Zentralen Zeichengabesatzes Nr. 7 oder des TCP/IP Protokolles eingesetzt wird. Wenn die Diensterbringungseinrichtung SERV dann mit einer Dienststeuerungsnachricht antwortet, die nicht von dem Knoten INTS selbst, sondern z.B. von der Nebenstellenanlage PABX1 umgesetzt werden soll, übersetzt der Knoten INTS diese Nachricht wiederum in das für die Nebenstellenanlage PABX1 verständliche Querleitungsprotokoll. Die wechselseitige Anpassung verschiedener Protokolle erfolgt in der bereits oben erwähnten Weise mit Hilfe der Schalteinrichtung SW, des Steuermittels CPU und dem Speicher MEM.

Der Knoten INTS kann Telekommunikationsdienste sowohl für das private Telekommunikationsnetz PN in seiner Gesamtheit, als auch für einzelne Teilnehmeranschlüsse innerhalb des privaten Telekommunikationsnetzes PN erbringen, für die jeweils ein bestimmter Telekommunikationsdienst vorgesehen ist. Es ist jedoch auch möglich, daß der Knoten INTS Telekommunikationsdienste nur für eine der Nebenstellenanlagen PABX1 oder PABX2 erbringt, z.B. für die Nebenstellenanlage PABX1. Dies ist z.B. dann sinnvoll, wenn die Nebenstellenanlage PABX2 solche Telekommunikationsdienste selbst erbringen kann, die Nebenstellenanlage PABX1 jedoch nur im Zusammenwirken mit dem Knoten INTS.

In einer weiteren Variante kann der Knoten INTS Telekommunikationsdienste für die Nebenstellenanlagen PABX1 und PABX2 in unterschiedlicher Qualität und auch in unterschiedlichem Umfang leisten. Wenn z.B. die Nebenstellenanlage PABX1 einen Ruf zu einer unbeschalteten Rufnummer selbst weiterverarbeiten kann, die Nebenstellenanlage PABX2 jedoch nicht, kann der Knoten INTS einen solchen Ruf zu der Nebenstellenanlage PABX1 direkt weitervermitteln, zu der Nebenstellenanlage PABX2 jedoch nicht. In diesem Falle muß der Knoten INTS den Ruf in der oben bereits erwähnten Weise selbst bearbeiten. Andere Dienste jedoch kann der Knoten INTS auch in dieser Variante für die Nebenstellenanlagen PABX1 und PABX2 gemeinsam erbringen und zwar unabhängig von deren jeweiligen Fähigkeiten, z.B. die erwähnten Dienste Kurzwahl oder Erkennung böswilliger Anrufer.

In einer weiteren Ausführungsform der Erfindung kann die Diensterbringungseinrichtung SERV in den Knoten INTS integriert werden.

Dabei können z.B. in dem Speicher MEM Programme abgelegt sein, mit denen das Steuermittel CPU zusätzlich zu den Funktionen des Knoten INTS auch die Funktionen der Diensterbringungseinrichtung SERV leisten kann. Es ist jedoch auch möglich, daß die Diensterbringungseinrichtung SERV über eine proprietäre Schnittstelle direkt an den Knoten INTS angekoppelt und damit quasi integriert ist. Dann können der Knoten INTS und die Diensterbringungseinrichtung SERV über ein speziell für diese proprietäre Schnittstelle definiertes Protokoll miteinander kommunizieren, z.B. auf der Basis des erwähnten TCP/IP Protokolles oder auch eines UDP Protokolles (User Datagram Protocol).

Bei Verbindungen, die der Knoten INTS innerhalb des privaten Telekommunikationsnetzes PN als zwischen dem Telekommunikationsnetz PSTN und dem privaten Telekommunikationsnetz PN herstellt, kann der Knoten INTS auch deren Daten erfassen, z.B. Daten über Quelle und Ziel der Verbindungen, Daten über den Zeitpunkt des Verbindungsaufbaus und des Verbindungsabbaus. Diese Daten kann der Knoten INTS in seinem Speicher MEM ablegen und bei einer Abfrage, z.B. mit Hilfe eines in Figur 1 nicht dargestellten, an den Knoten INTS anschließbaren Bedienterminals, zur Verfügung stellen, so daß anhand dieser Daten Teilnehmern des privaten Telekommunikationsnetzes PN Gebühren berechnet werden können. Es ist jedoch auch möglich, daß der Knoten INTS Daten von Verbindungen von Zeit zu Zeit oder unmittelbar nach deren Erfassung, quasi "online", an eine Gebührenverarbeitungseinrichtung sendet. Eine solche Gebührenverarbeitungseinrichtung könnte z.B. als eine zusätzliche Funktion in die Diensterbringungseinrichtung SERV integriert sein. Der Knoten INTS kann jedoch auch selbst Gebührendaten ermitteln, z.B. durch Analyse der genannten Verbindungsdaten, und diese Gebührendaten an die Gebührenverarbeitungseinrichtung senden.

Weiter kann der Knoten INTS eine Schnittstelle zu einer Netzwerksteuerungseinrichtung aufweisen, z.B. zu einem sogenannten TMN-System (Telecommunications Network Management), über das z.B. der Nummernplan des privaten Telekommunikationsnetzes PN verwaltet oder der Verkehr auf den Verbindungen des privaten Telekommunikationsnetzes PN beobachtet werden kann. Die Netzwerksteuerungseinrichtung kann ähnlich wie die Diensterbringungseinrichtung SERV an den Knoten INTS angeschlossen sein. Auch an die Netzwerksteuerungseinrichtung sendet der Knoten INTS z.B. Daten von Verbindungen zur dortigen Auswertung in Form einer Verkehrsbeobachtung. Andrerseits empfängt der Knoten INTS von der Netzwerksteuerungseinrichtung Anweisungen, die der Knoten INTS dann entweder selbst ausführt oder auch an die an die an ihn angeschlossenen Nebenstellenanlagen weiterleitet. Diese Anweisungen enthalten z.B. eine geänderte Rufnummer eines Teilnehmers und müssen deshalb beispielsweise in die oben erwähnte Rufnummernportabilitätstabelle eingetragen werden.

Der Knoten INTS kann eine eigenständige Einrichtung sein, z.B. eine Vermittlungsstelle, die Transitfunktionen und Dienstfunktionen für das aus den Nebenstellenanlagen PABX1 und PABX2 gebildete Nebenstellennetz erbringt. Es ist aber auch möglich, daß der Knoten INTS eine Schnittstelleneinrichtung ist, die in eine Nebenstellenanlage eingliedert ist, z.B. als ein Schnittstellenmodul in die Nebenstellenanlage PABX1, und sowohl für diese Nebenstellenanlage, als auch für weitere Nebenstellenanlagen, z.B. die Nebenstellenanlage PABX2, Transitfunktionen und Dienstfunktionen erbringt.

## Patentansprüche

1. Knoten (INTS) zur Erbringung von Telekommunikationsdiensten für Nebenstellentelekommunikationsnetze, der erste Verbindungsmittel aufweist, die so ausgestaltet sind, daß der Knoten (INTS) Verbindungen zwischen mindestens einem ersten Nebenstellentelekommunikationsnetz (PABX1) und einem zweiten Nebenstellentelekommunikationsnetz (PABX2) mit Hilfe mindestens eines ersten, zwischen Nebenstellentelekommunikationsnetzen gebräuchlichen Protokolles aufbauen kann, und wobei der Knoten zweite Verbindungsmittel aufweist, die so ausgestaltet sind, daß der Knoten eine Verbindung zu einem externen Telekommunikationsnetz (PSTN) aufbauen kann, **dadurch gekennzeichnet, daß** der Knoten Diensterbringungsmittel aufweist, die so ausgestaltet sind, daß der Knoten Dienstfunktionen für das erste oder das zweite Nebenstellentelekommunikationsnetz erbringen kann und daß die zweiten Verbindungsmittel so ausgestaltet sind, daß der Knoten eine Verbindung von dem ersten oder dem zweiten Nebenstellentelekommunikationsnetz zu dem externen Telekommunikationsnetz aufbauen kann.

2. Knoten (INTS) nach Anspruch 1, dadurch gekennzeichnet, daß die zweiten Verbindungsmittel so ausgestaltet sind, daß der Knoten mindestens das erste, zwischen Nebenstellentelekommunikationsnetzen gebräuchliche Protokoll und ein zweites, in dem externen Telekommunikationsnetz (PSTN) gebräuchliches Protokoll wechselseitig aufeinander anpassen kann.

3. Knoten (INTS) nach Anspruch 1, dadurch gekennzeichnet, daß die Diensterbringungsmittel so ausgestaltet sind, daß der Knoten (INTS) die Dienstfunktionen mit Hilfe einer Dienststeuerungseinheit (SERV) erbringen kann.

4. Knoten (INTS) nach Anspruch 1, dadurch gekennzeichnet, daß die ersten Verbindungsmittel so ausgestaltet sind, daß der Knoten ein von dem ersten Nebenstellentelekommunikationsnetz (PABX1) verwendetes Protokoll und ein von dem zweiten Nebenstellentelekommunikationsnetz (PABX2) verwendetes Protokoll wechselseitig aufeinander anpassen kann.

5. Knoten (INTS) nach Anspruch 3, dadurch gekennzeichnet, daß der Knoten einen Protokollumsetzer aufweist, der so ausgestaltet ist, daß der Knoten ein von der Dienststeuerungseinheit (SERV) verwendetes Protokoll und das erste Protokoll wechselseitig aufeinander anpassen kann.

6. Knoten (INTS) nach Anspruch 1, dadurch gekennzeichnet, daß die Diensterbringungsmittel so ausgestaltet sind, daß der Knoten die Dienstfunktionen in Form von in einem Intelligenten Netz standardisierten Dienstfunktionen erbringen kann.

7. Knoten (INTS) nach Anspruch 1, dadurch gekennzeichnet, daß der Knoten Erfassungsmittel aufweist, die so ausgestaltet sind, daß der Knoten (INTS) Daten von Verbindungen erfassen kann, die über den Knoten geführt werden.

8. Knoten (INTS) nach Anspruch 7, dadurch gekennzeichnet, daß der Knoten eine Schnittstelleneinrichtung zu einer Gebührenverarbeitungseinrichtung aufweist, die so ausgestaltet sind, daß der Knoten Daten von Verbindungen an die Gebührenverarbeitungseinrichtung übermitteln kann.

9. Knoten (INTS) nach Anspruch 1, dadurch gekennzeichnet, daß er eine Schnittstelleneinrichtung zu einer Netzwerksteuerungseinrichtung aufweist.

10. Verfahren zur Erbringung von Telekommunikationsdiensten für Nebenstellentelekommunikationsnetze bei dem über einen Knoten (INTS) Verbindungen zwischen mindestens einem ersten Nebenstellentelekommunikationsnetz (PABX1) und einem zweiten Nebenstellentelekommunikationsnetz (PABX2) mit Hilfe mindestens eines ersten, zwischen Nebenstellentelekommunikationsnetzen gebräuchlichen Protokolles aufgebaut werden, und bei dem über den Knoten (INTS) Verbindung zu einem externen Telekommunikationsnetz (PSTN) aufgebaut werden, **dadurch gekennzeichnet, daß** bei dem Verfahren der Knoten Dienstfunktionen für das erste oder das zweite Nebenstellentelekommunikationsnetz erbringen kann und daß der Knoten eine Verbindung von dem ersten oder dem zweiten Nebenstellentelekommunikationsnetz zu dem externen Telekommunikationsnetz aufbauen kann.
